# EUROPEAN PATENT APPLICATION

(11) **EP 4 318 627 A1**
(43) Date of publication of application: **07.02.2024**
(21) Application number: 21933650.0
(22) Date of filing: 30.03.2021
(51) Int. Cl.: H01M 4/13

(54) **ELECTROCHEMICAL DEVICE AND ELECTRONIC DEVICE**

(71) Applicant: Ningde Amperex Technology Limited, Ningde, Fujian 352100 (CN)
(72) Inventor: LI, Weiwei, Ningde, Fujian 352100 (CN)
(74) Representative: Klunker IP Patentanwälte PartG mbB
(86) International application number: PCT/CN2021/084063
(87) International publication number: WO 2022/204968

(57) **Abstract**

This application provides an electrochemical device and an electronic device. The electrochemical device includes a positive electrode, the positive electrode including a positive electrode current collector, a protective coating disposed on a surface of one side of the positive electrode current collector close to a tab portion, and a positive electrode active material layer disposed on a surface of at least one side of the positive electrode current collector. The protective coating includes a first active material, and the positive electrode active material layer includes a second active material. According to embodiments of this application, by disposing the protective coating on the positive electrode current collector, lithium plating at the negative electrode of the electrochemical device is alleviated while ensuring the safety performance of the electrochemical device.

## Description

### TECHNICAL FIELD

This application relates to the field of electrochemical energy storage, in particular to electrochemical devices and electronic devices.

### BACKGROUND

As electrochemical devices (e.g., lithium-ion batteries) develop and advance, higher demands are placed on their safety performance and cycling performance. In order to improve the charge and discharge performance of electrochemical devices, an electrode plate is usually cut into a multi-tab structure, and the cutting position is coated with an insulating layer, so as to achieve the effects of insulating and preventing burrs produced by cutting from piercing a separator.

However, the insulating layer does not exert its gram capacity, which affects the increase of the energy density of an electrochemical device. Therefore, further improvements are desired.

### SUMMARY

Some embodiments of this application provide an electrochemical device. The electrochemical device includes a positive electrode, the positive electrode including a positive electrode current collector, a protective coating disposed on a surface of one side of the positive electrode current collector close to a tab portion, and a positive electrode active material layer disposed on a surface of at least one side of the positive electrode current collector. The protective coating includes a first active material, and the positive electrode active material layer includes a second active material.

In some embodiments, the positive electrode satisfies the following relational expression: m₁ × q₁ × l₁ ≤ 90% × m₂ × q₂ × l₂, wherein m₁ represents a coating weight per unit area of the protective coating, m₂ represents a coating weight per unit area of the positive electrode active material layer, q₁ represents a gram capacity of the first active material, q₂ represents a gram capacity of the second active material, l₁ represents a mass content of the first active material in the protective coating, and lz represents a mass content of the second active material in the positive electrode active material layer. In some embodiments, the coating weight m₁ per unit area of the protective coating is within a range of: 0.026 mg/mm²≤m₁≤0.182 mg/mm². In some embodiments, the coating weight m₂ per unit area of the positive electrode active material layer is within a range of: 0.130 mg/mm²≤m₂≤0.520 mg/mm². In some embodiments, the mass content l₁ of the first active material in the protective coating satisfies the following condition: 85%≤l₁≤99%. In some embodiments, the mass content l₂ of the second active material in the positive electrode active material layer satisfies the following condition: 85%≤l₂≤99%.

In some embodiments, the first active material includes at least one of ferrous lithium phosphate or lithium manganese ferro-phosphate, and the second active material includes at least one of lithium cobalt oxide, lithium nickel manganese cobalt oxide, lithium nickel cobalt aluminum oxide, lithium manganate, lithium nickel manganese oxide or lithium cobalt manganese oxide.

In some embodiments, the protective coating further includes a conductive agent and a binder, and a mass ratio of the first active material to the conductive agent to the binder is (85%~99%): (0% - 10%): (1% - 12%). In some embodiments, the conductive agent includes at least one of conductive carbon black, conductive graphite, carbon fiber, a multi-walled carbon nanotube, a single-walled carbon nanotube, hard carbon, soft carbon, Ketjen black or graphene, and the binder includes at least one of polyvinylidene fluoride, polytetrafluoroethylene, sodium carboxymethylcellulose, lithium sodium carboxymethylcellulose, modified polyvinylidene fluoride, modified styrene butadiene rubber or polyurethane.

In some embodiments, a porosity of the protective coating is 15% to 50%. In some embodiments, a width of the protective coating is greater than or equal to 0.5 mm, and less than or equal to 10 mm. In some embodiments, a resistance of the protective coating in a full charge state is greater than or equal to 30 Q. In some embodiments, Dv50 of the first active material is less than or equal to 5 µm, and Dv99 of the first active material is less than or equal to 10 µm. In some embodiments, the protective coating is adjacent to or partially coincident with the positive electrode active material layer.

In some embodiments, the negative electrode includes a negative electrode current collector and a negative electrode active material layer located on at least part of a surface of the negative electrode current collector, and an orthographic projection of the protective coating on the negative electrode active material layer partially or wholly falls on the negative electrode active material layer.

Embodiments of this application further provide an electronic device. The electronic device includes the electrochemical device described above.

According to embodiments of this application, the protective coating is disposed on the positive electrode current collector and includes a first active material, so as to provide a certain gram capacity relative to a common protective adhesive, thereby increasing the energy density of the electrochemical device. In addition, with the protective coating according to embodiments of this application, charge and discharge can be normally conducted, and therefore, the negative electrode active material at the orthographic projection of the protective coating is less prone to excessive polarization, thereby avoiding lithium plating. In contrast, since a common insulation layer or protective adhesive has low internal porosity and does not conduct electricity, the negative electrode active material at the orthographic projection of the insulation layer cannot gain or lose lithium ions through a normal path, which leads to extremely large polarization. When the potential is reduced to a certain extent due to polarization, lithium plating occurs.

### BRIEF DESCRIPTION OF DRAWINGS

FIGs. 1 to 2 show sectional views of a positive electrode along a plane defined in a thickness direction and a width direction of a positive electrode current collector according to some embodiments of this application.
FIG. 3 and FIG. 4 show sectional views of an electrode assembly of an electrochemical device according to some embodiments of this application.

### DETAILED DESCRIPTION OF EMBODIMENTS

The following embodiments will enable those skilled in the art to more fully understand this application, but do not limit the present application in any way.

A multi-tab structure is usually adopted, so as to improve the charge-discharge performance of electrochemical devices. In the production process, a multi-tab structure is generally implemented by means of physical cutting or laser cutting. In order to prevent a short circuit caused when burrs produced during cutting pierce a separator, insulation layers or insulation adhesives are generally arranged on both sides of a cutting surface. Although the insulation layers and insulation adhesive have a good protective effect, they do not give full play to their gram capacity. Moreover, the insulation layers and insulation adhesives are swollen strongly with an electrolyte, which weakens the bonding force between the insulation layers or insulation adhesives and a current collector, making the insulation layers or insulation adhesives prone to falling off from the current collector and losing the protective effect. In general, the short-circuit mode between the positive electrode current collector and the negative electrode active material layer is the most dangerous mode, because large heat is produced during the short circuit, and the negative electrode active material layer may easily get out of control. Therefore, avoiding this short-circuit mode is the most effective way to improve the safety performance of electrochemical devices.

By using a protective coating including active materials, the capacity of the electrochemical device is improved on the premise of satisfying the safety performance. In addition, with the protective coating according to embodiments of this application, charge and discharge can be normally conducted, and therefore, the negative electrode active material at the orthographic projection of the protective coating is less prone to excessive polarization, thereby avoiding lithium plating. In contrast, since a common insulation layer or protective adhesive has low internal porosity and does not conduct electricity, the negative electrode active material at the orthographic projection of the insulation layer cannot gain or lose lithium ions through a normal path, which leads to extremely large polarization. When the potential is reduced to a certain extent due to polarization, lithium plating occurs.

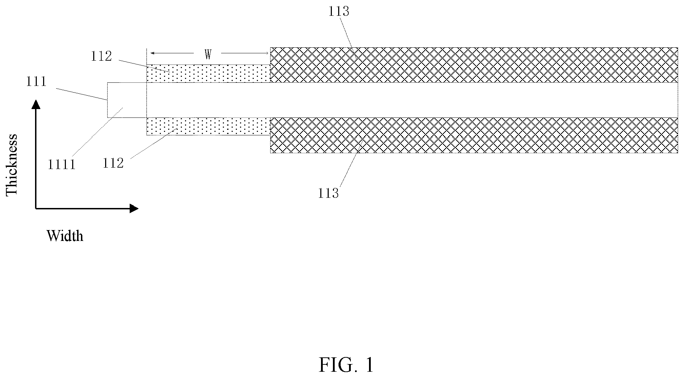

Some embodiments of this application provide an electrochemical device. The electrochemical device includes a positive electrode. In some embodiments, as shown in FIG. 1, the positive electrode includes a positive electrode current collector 111, a protective coating 112 and a positive electrode active material layer 113 disposed on a surface of at least one side of the positive electrode current collector 111. In some embodiments, the protective coating 112 is disposed on a surface of one side of the positive electrode current collector 111 close to a tab portion 1111. In some embodiments, the tab portion 1111 may be connected with an external tab. In some embodiments, the tab portion 1111 may be a tab, thereby omitting any external tab. In some embodiments, the protective coating 1112 includes a first active material, and the positive electrode active material layer 1113 includes a second active material. It should be understood that although the protective coating 112 and the positive electrode active material layer 113 are shown in FIG. 1 as on both sides of the positive electrode current collector 111, this is only exemplary and is not intended to limit this application. The protective coating 112 and/or the positive electrode active material layer 113 may be located only on one side of the positive electrode current collector 111.

In some embodiments, when cutting to form a positive electrode tab of a positive electrode, the protective coating 112 may protect the separator from the adverse effects of the burrs of the positive electrode current collector 111 produced during cutting. In addition, the protective coating 112 has a certain resistance so that even if the protective coating 112 is in direct contact with the negative electrode, no great risk will be caused. By disposing the protective coating 112 on the positive electrode current collector 111, the safety performance of the corresponding electrochemical device is improved. In addition, the protective coating 112 includes the first active material, so as to provide a certain gram capacity compared to an insulation layer without any active material, thereby increasing the energy density of the electrochemical device. In addition, if the insulation layer is used, it is difficult for the insulation layer to provide a lithium ion path, which can easily lead to lithium plating at the negative electrode on the side corresponding to the insulation layer. Compared with the adoption of the insulating layer, the adoption of the protective coating of this application can also alleviate lithium plating at the negative electrode.

In some embodiments, the positive electrode satisfies the following relational expression: m₁ × q₁ × l₁ ≤ 90% × m₂ × q₂ × l₂, wherein m₁ represents a coating weight per unit area of the protective coating, m₂ represents a coating weight per unit area of the positive electrode active material layer, q₁ represents a gram capacity of the first active material, q₂ represents a gram capacity of the second active material, l₁ represents a mass content of the first active material in the protective coating, and l₂ represents a mass content of the second active material in the positive electrode active material layer. That is, the capacity per unit area of the protective coating is less than 90% of the capacity per unit area of the positive electrode active material layer. In this way, the negative electrode opposite to the protective coating is not in an overcharged state, and lithium plating at the negative electrode close to the protective coating is alleviated. In some embodiments, the coating weight m₁ per unit area of the protective coating is within a range of: 0.026 mg/mm²≤m₁≤0.182 mg/mm². In some embodiments, the coating weight m₂ per unit area of the positive electrode active material layer is within a range of: 0.130 mg/mm²≤m₂≤0.520 mg/mm². In some embodiments, the mass content l₁ of the first active material in the protective coating satisfies the following condition: 85%≤l₁≤99%. In some embodiments, the mass content l₂ of the second active material in the positive electrode active material layer meets the following condition: 85%≤l₂≤99%.

The gram capacity of the first active material can be tested according to the following method: disassembling a battery after the battery is fully charged, washing off a protective coating with N-methylpyrrolidone (NMP), centrifuging to separate out an active material (the active material is present in precipitates at the bottom layer), and then conducting drying; pulping using materials, by mass percentage, 95% of active material, 2% of conductive carbon black and 3% of binder (the binder is polyvinylidene fluoride PVDF), evenly coating a current collector with the coating surface density of 0.195 mg/mm², and after drying, stamping into a wafer with a diameter of 15 mm; disassembling the battery after the battery is fully discharged, washing off the protective coating with NMP, centrifuging to separate out the active material (the active material is present in precipitates at the bottom layer) and conducting drying; then pulping using materials, by mass percentage, 95% of active material, 2% of conductive carbon black and 3% of binder (the binder is polyvinylidene fluoride PVDF), evenly coating the current collector with the coating surface density of 0.195 mg/mm², and after drying, stamping into a wafer with a diameter of 15 mm; pairing the above two wafers to make electricity-deduction, and making three groups of parallel samples to measure voltage V; discharging at a current rate of 10 mA until the voltage is 0 V, and recording the discharge for t hours, where the gram capacity of the active material is: 2*10*t/(0.195*0.95*176.7), in a unit of: Ah*g⁻¹. The method for testing the gram capacity of the second active material is the same as the method above, and what is only required is to change the protective coating to the positive electrode active material layer. It should be understood that the above methods for testing the gram capacity are for illustrative purposes only, and other suitable testing methods may also be adopted.

In some embodiments, the first active material includes at least one of ferrous lithium phosphate or lithium manganese ferro-phosphate. In some embodiments, at least one of lithium cobalt oxide, lithium manganate or lithium nickel manganese cobalt oxide may also be added to the first active material. The resistance of ferrous lithium phosphate or lithium manganese ferro-phosphate increases at high voltage, so that a protective effect is achieved in the case of a short circuit of the electrochemical device. As discharge goes on, the resistance decreases, the polarization of the protective coating 112 is lowered, and the electricity is further released, so that both the safety performance and the capacity of the electrochemical device are taken into consideration. In some embodiments, the second active material includes at least one of lithium cobalt oxide, lithium nickel manganese cobalt oxide, lithium nickel cobalt aluminum oxide, lithium manganate, lithium nickel manganese oxide or lithium cobalt manganese oxide. These active materials can provide the capacity for the positive electrode.

In some embodiments, the protective coating 112 further includes a conductive agent and a binder, and a mass ratio of the first active material to the conductive agent to the binder is (85%-99%): (0% - 10%): (1% - 12%). The protective coating 112 within this range of mass ratio has a higher proportion of active materials, which not only increases the energy density of the electrochemical device, but also ensures the appropriate electrical conductivity and bonding properties of the protective coating 112.

In some embodiments, the conductive agent in the protective coating 112 includes at least one of conductive carbon black, conductive graphite, carbon fiber, a multi-walled carbon nanotube, a single-walled carbon nanotube, hard carbon, soft carbon, Ketjen black or graphene. In some embodiments, the mass content of the conductive agent in the protective coating 112 is 0.5% to 10%. In this way, the rate performance of the electrochemical device is improved under the condition of ensuring the safety performance of the electrochemical device. If the content of the conductive agent is too high, the resistance of the protective coating 112 after full charging is too low, which affects the safety performance; if the content of the conductive agent is too low and the content of the binder is too high, the resistance is so high that the electrochemical performance of the protective coating 112 is weakened. In some embodiments, the mass content of the conductive agent in the protective coating 112 is 0.3% to 8%. In some embodiments, the binder in the protective coating 112 includes at least one of polyvinylidene fluoride, polytetrafluoroethylene, sodium carboxymethylcellulose, lithium sodium carboxymethylcellulose, modified polyvinylidene fluoride, modified styrene butadiene rubber or polyurethane.

In some embodiments, a porosity of the protective coating 112 is 15% to 50%. The excessively low porosity of the protective coating 112 may affect the transport of Li ions, while the excessively high porosity of the protective coating 112 may lead to poor internal contact, low adhesive property and poor electronic conductivity of the protective coating 112. In some embodiments, the porosity of the protective coating 112 is 18% to 40%. The porosity of the protective coating 112 can be tested according to the following method: disassembling an electrode assembly, and keeping the positive electrode intact; rinsing the positive electrode with dimethyl carbonate for 30 min, and drying at 100°C for 4h; measuring a thickness of an empty current collector; afterwards, cutting the protective coating containing the current collector into a long strip, calculating, based on the length, width and height of the strip and the thickness of the empty current collector, the apparent volume Voh of a cut part of an electrode plate of the protective coating and the volume Vol₂ of the current collector, and then testing the porosity by the "gas displacement" method.

The test method of the "gas replacement" method is as follows: at a constant temperature of 25°C, vacuumizing a sealable container with a fixed volume until the air pressure is ≤ 0.5 kPa, then slowly filling the container with nitrogen until the air pressure reaches 101.325 kPa, and recording the volume Vol₃ of nitrogen filling the container; adding a certain quantity of cut protective coating sheets to the container so that the total apparent volume is greater than 0.35 mm², slowly vacuumizing the container until the air pressure is ≤ 0.5 kPa, then slowly filling the container with nitrogen until the air pressure reaches 101.325 kPa, and recording the volume Vol₄ of nitrogen filling the container, where the porosity of the protective coating is (Vol₃- Vol₄-Vol₂)/(Vol₁- Vol₂).

As shown in FIG. 1, in some embodiments, a width W of the protective coating 112 is greater than or equal to 0.5 mm, and less than or equal to 10 mm. On one hand, when the width W of the protective coating 112 is too small, the situation that some parts may be left uncoated may occur, and coating cannot be achieved stably. In addition, the small width W of the protective coating 112 may reduce the alleviating effect of lithium plating. On the other hand, an excessively large width of the protective coating 112 may seriously reduce the energy density of the whole electrochemical device and the electrochemical performance of the whole electrochemical device.

In some embodiments, a resistance of the protective coating 112 in a full charge state is greater than or equal to 30 Q. In this way, a better protection effect can be achieved, and the safety performance of the electrochemical device can be improved. In addition, the resistance of ferrous lithium phosphate or lithium manganese ferro-phosphate increases at high voltage, so that a protective effect is achieved in the case of a short circuit of the electrochemical device. As discharge goes on, the resistance decreases, the polarization of the protective coating 112 is lowered, and the electricity is further released, so that both the safety performance and the capacity of the electrochemical device are taken into consideration. In case the resistance of the protective coating 112 in the full charge state is too low, when a short circuit occurs in the protective coating-negative electrode active material layer, the excessive short-circuit current leads to too excessive temperature rise, which brings the risk of thermal runaway. The resistance of the protective coating 112 can be tested according to the following method: disassembling the full charge battery, and keeping the positive electrode intact; rinsing the positive electrode with dimethyl carbonate for 30 min, and drying at 100°C for 4h; afterwards, cutting out the protective coating by a length of at least 1.5 cm, and testing with a four-probe resistance testing instrument, wherein two cylindrical metal terminals with a diameter of 1.2 cm are used as resistance test terminals, during the test, the protective coating is placed in the middle of the plane of the metal terminal, a pressure of 0.4 ton is applied to both ends of the terminal, and the resistance value at the fifth second is the resistance of the protective coating. It should be understood that the resistance testing method is for illustrative purposes only rather than for limitation, and other suitable methods can also be used.

In some embodiments, Dv50 of the first active material is less than or equal to 5 µm, and Dv99 of the first active material is less than or equal to 10 µm. Dv50 of the first active material refers to a corresponding particle size when the cumulative volume distribution of particles of the first active material reaches 50%, and Dv99 of the first active material refers to a corresponding particle size when the cumulative volume distribution of the particles of the first active material reaches 99%. The particle size of the first active material of the protective coating 112 directly affects the minimum thickness of the protective coating 112. A small particle size has the advantages that the protective coating 112 can be very thin and ensure coverage. The smaller the Dv50 and Dv99 of the first active material are, the more layers of particles are stacked in the protective coating 112 of the same thickness, and the better the protection effect is, the larger the specific surface area is, and the better the electrical performance of the electrochemical device is.

The particle size of active materials is tested by a laser particle analyzer. A blank background test is first carried out after the laser particle analyzer is turned on, and the following particle size test is carried out when there is no obvious characteristic peak in the blank background: Taking a certain amount (1 g) of active material, adding an appropriate amount of surfactant (e.g., sodium dodecyl sulfonate), adding a dispersant (water or alcohol or N-methylpyrrolidone (NMP)) for dispersion, conducting ultrasonic treatment for 10 min, adding the dispersed material to a sample chamber, then testing to obtain the particle size distribution of the material, automatically outputting the particle size distribution of the material using relevant software, and calculating to obtain Dv50 (the corresponding particle size when the cumulative volume distribution of the sample reaches 50%) and Dv99 (the corresponding particle size when the cumulative volume distribution of the sample reaches 99%).

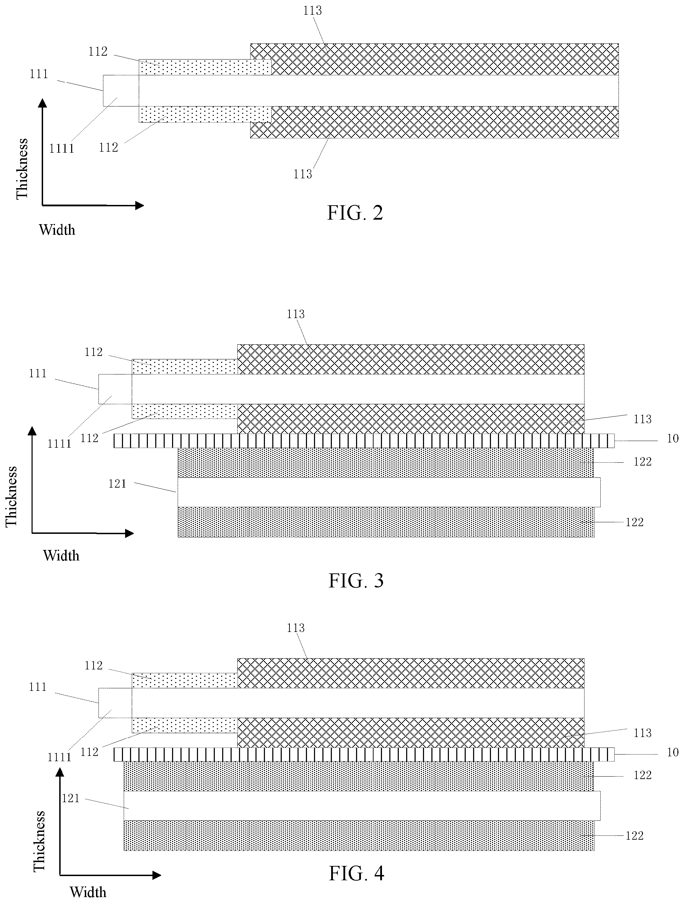

FIG. 1 shows that the protective coating 112 is adjacent to the positive electrode active material layer 113. In some embodiments, as shown in FIG. 2, at least part of the protective coating 112 is located between the positive electrode current collector 111 and the negative electrode active material layer 113, that is, the protective coating 112 can partially coincide with the positive electrode active material layer 113.

FIG. 3 and FIG. 4 show sectional views of an electrode assembly of an electrochemical device along a plane defined in a thickness and width of the separator according to some embodiments of this application. It should be understood that for the electrode assembly of a winding structure, the sectional views are sectional views of the expanded electrode assembly along the plane defined in the thickness and width of the separator. In some embodiments, as shown in FIG. 3, the negative electrode includes a negative electrode current collector 121 and a negative electrode active material layer located on at least part of a surface of the negative electrode current collector laser particle analyzer. In some embodiments, an orthographic projection of the protective coating 122 partially or wholly falls on the negative electrode active material layer 122. In this way, the protective effect of the protective coating 112 can be improved, and the safety performance of the electrochemical device can be improved. In some embodiments, as shown in FIG. 4, the orthographic projection of the protective coating 112 wholly falls on the negative electrode active material layer 122. In this way, there can be more negative electrode active material layers 122 to receive lithium ions, so as to alleviate lithium plating of the negative electrode. In some embodiments, the tab portion 1111 of the positive electrode current collector 111 without a protective coating may be used as a positive electrode tan, and an additional protective coating may be present at the tab portion 1111.

In some embodiments, the separator 10 generally has certain ductility, so as to play a certain role of protecting against the piercing process of burrs in the current collector. Since the protective coating 112 is located between the positive electrode current collector 111 and the separator 10, there is a certain adhesive property between the protective coating 112 and the separator 10 after the two are in contact with each other under pressure, which is beneficial to further protecting the separator 10 from being pierced. In some embodiments, the adhesive property between the protective coating 112 and the separator 10 is greater than or equal to 5 N/m.

In some embodiments, the surface of the positive electrode current collector 111 or the surface of the protective coating 112 may be patterned or roughened to improve the adhesive property between the protective coating 112 and the positive electrode current collector 111 or between the protective coating 112 and the separator 10.

In some embodiments, the positive electrode active material layer 113 may further include a conductive agent. In some embodiments, the conductive agent in the positive electrode active material layer 113 may include at least one of conductive carbon black, Ketjen black, flake graphite, graphene, carbon nanotubes, or carbon fibers. In some embodiments, the positive electrode active material layer 113 may further include a binder, and the binder in the positive electrode active material layer 113 may include at least one of carboxymethylcellulose (CMC), polyacrylic acid, polyvinyl pyrrolidone, polyaniline, polyimide, polyamide-imide, polysiloxane, butadiene styrene rubber, epoxy resin, polyester resin, polyurethane resin or polyfluorene. In some embodiments, the mass ratio of the positive electrode active material to the conductive agent to the binder in the positive electrode active material layer 113 may be (80 to 99): (0.1 to 10): (0.1 to 10). In some embodiments, the thickness of the positive electrode active material layer 113 may be 10 µm to 500 µm. It should be understood that the above are examples only, and any other suitable material, thickness and mass ratio can also be adopted for the positive electrode active material layer 113 of the positive electrode.

In some embodiments, the positive electrode current collector 111 of the positive electrode can adopt Al foil. Certainly, other current collectors commonly used in the art may also be used. In some embodiments, the thickness of the positive electrode current collector 111 of the positive electrode may be 1 µm to 200 µm. In some embodiments, the positive electrode active material layer 113 may be coated only on a portion of the positive electrode current collector 111 of the positive electrode.

In some embodiments, the negative electrode active material layer 122 includes a negative electrode active material, and the negative electrode active material may include at least one of graphite, hard carbon, silicon, silicon monoxide or organosilicon. In some embodiments, the negative electrode active material layer 122 may further include a conductive agent and a binder. In some embodiments, the conductive agent in the negative electrode active material layer 122 may include at least one of conductive carbon black, Ketjen black, flake graphite, graphene, carbon nanotubes, or carbon fibers. In some embodiments, the binder in the negative electrode active material layer 122 may include at least one of carboxymethylcellulose (CMC), polyacrylic acid, polyvinyl pyrrolidone, polyaniline, polyimide, polyamide-imide, polysiloxane, butadiene styrene rubber, epoxy resin, polyester resin, polyurethane resin or polyfluorene. In some embodiments, the mass ratio of the negative electrode active material to the conductive agent to the binder in the negative electrode active material layer 122 may be (80 to 98): (0.1 to 10): (0.1 to 10). It should be understood that the above are examples only, and any other suitable material and mass ratio can also be adopted. In some embodiments, the negative electrode current collector 121 of the negative electrode may adopt at least one of copper foil, nickel foil or carbon-based current collector.

In some embodiments, the separator 10 includes at least one of polyethylene, polypropylene, polyvinylidene fluoride, polyethylene terephthalate, polyimide, or aramid. For example, the polyethylene includes at least one of high density polyethylene, low density polyethylene or ultra-high molecular weight polyethylene. Particularly, polyethylene and polypropylene have a good effect for preventing short circuits and can improve the stability of a battery through a shutdown effect. In some embodiments, the thickness of the separator is within the range of about 5 µm to 500 µm.

In some embodiments, the surface of the separator may further include a porous layer disposed on at least one surface of a substrate of the separator, the porous layer including inorganic particles and a binder. The inorganic particles are selected from at least one of aluminum oxide (Al₂O₃), silicon oxide (SiO₂), magnesium oxide (MgO), titanium oxide (TiO₂), hafnium oxide (HfO₂), tin oxide (SnO₂), cerium oxide (CeO₂), nickel oxide (NiO), zinc oxide (ZnO), calcium oxide (CaO), zirconium oxide (ZrO₂), yttrium oxide (Y₂O₃), SiC, boehmite, aluminum hydroxide, magnesium hydroxide, calcium hydroxide, or barium sulfate. In some embodiments, pores of the separator have a diameter within the range of about 0.01 µm to 1 µm. The binder of the porous layer is selected from at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinyl pyrrolidone, polyvinyl ether, polymethyl methacrylate, polytetrafluoro ethylene, or polyhexafluoropropylene. The porous layer on the surface of the separator can improve the heat resistance, oxidation resistance and electrolyte wetting property of the separator and enhance the adhesion force between the separator and an electrode plate.

In some embodiments of this application, the electrode assembly of the electrochemical device is a coiled electrode assembly, a stacked electrode assembly or a folded electrode assembly. In some embodiments, the positive electrode and/or negative electrode of the electrochemical device may be one of multi-layer structure formed by winding or stacking, or a single-layer structure superimposed by a single-layer positive electrode, a separator and a single-layer negative electrode.

In some embodiments, the electrochemical device includes a lithium-ion battery, but the present application is not so limited thereto. In some embodiments, the electrochemical device may further include an electrolyte. The electrolyte may be one or more of a gel electrolyte, a solid electrolyte, and an electrolytic solution including a lithium salt and a non-aqueous solvent. The lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, the lithium salt may be LiPF₆, as it has a high ionic conductivity and can improve cycle performance.

The non-aqueous solvent may be a carbonate compound, a carboxylic ester compound, an ether compound, other organic solvents, or combinations thereof.

The carbonate compound may be a chain carbonate compound, a cyclic carbonate compound, a fluorocarbonate compound, or a combination thereof.

Examples of the chain carbonate compound are diethyl carbonate (DEC), dimethyl carbonate (DMC), dipropyl carbonate (DPC), methyl propyl carbonate (MPC), ethyl propyl carbonate (EPC), methyl ethyl carbonate (MEC) and combinations thereof. Examples of the cyclic carbonate compound are ethylene carbonate (EC), propylene carbonate (PC), butylene carbonate (BC), vinyl ethylene carbonate (VEC), or a combination thereof. Examples of the fluorocarbonate compound are FEC carbonate, 1, 2-difluoroethylene carbonate, 1, 1-difluoroethylene carbonate, 1, 1, 2-trifluoroethylene carbonate, 1, 1, 2, 2-tetrafluoroethylene carbonate, 1-fluoro-2-methylethylene carbonate, 1-fluoro-1-methylethylene carbonate, 1, 2-difluoro-1-methylethylene carbonate, 1, 1, 2-trifluoro-2-methylethylene carbonate, trifluoromethylethylene carbonate, or combinations thereof.

Examples of the carboxylic ester compound are methyl acetate, ethyl acetate, n-propyl acetate, t-butyl acetate, methyl propionate, ethyl propionate, propyl propionate, γ-butyrolactone, decalactone, valerolactone, mevalonolactone, caprolactone, methyl formate, or combinations thereof.

Examples of the ether compound are dibutyl ether, tetraglyme, diglyme, 1, 2-dimethoxyethane, 1, 2-diethoxyethane, ethoxymethoxyethane, 2-methyl tetrahydrofuran, tetrahydrofuran, or combinations thereof.

Examples of other organic solvents are dimethylsulfoxide, 1, 2-dioxolane, sulfolane, methylsulfolane, 1, 3-dimethyl-2-imidazolidinone, N-methyl-2-pyrrolidone, formamide, dimethylformamide, acetonitrile, trimethyl phosphate, triethyl phosphate, trioctyl phosphate, phosphate esters or combinations thereof.

In some embodiments of this application, taking a lithium-ion battery as an example, the positive electrode, the separator and the negative electrode are sequentially wound or stacked into electrode parts, then the electrode parts are packed into, e.g., aluminum-plastic film for packaging, an electrolyte is injected, and formation and packaging are then conducted to make a lithium-ion battery. The performance of the prepared lithium-ion battery is then tested.

It will be appreciated by those skilled in the art that the preparation method of the electrochemical device (e.g., the lithium-ion battery) described above is merely an example. Other methods commonly used in the art may be employed without departing from the disclosure herein.

Embodiments of this application further provide an electronic device. The electronic device includes the electrochemical device described above. The electronic device of the embodiment of this application is not particularly limited, and may be used for any electronic device known in the art. In some embodiments, the electronic device may include, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, a power tool, a flash light, a camera, a large household storage battery, a lithium-ion capacitor, etc.

Some specific embodiments and comparative embodiments are listed below to better illustrate this application, wherein the lithium-ion battery is used as an example.

### Embodiment 1

Preparation of positive electrode: With an aluminum foil as a positive electrode current collector of a positive electrode, lithium cobalt (g capacity q₂ is 176 mAh/g) as a positive electrode active material, conductive carbon black as a conductive agent and polyvinylidene fluoride were dissolved in N-methyl pyrrolidone (NMP) solution in a weight ratio of 96:2.4:1.6 to form a slurry of a positive electrode active material layer. The slurry was coated on the positive electrode current collector with a thickness of 80 µm to obtain a positive electrode active material layer. A slurry of a protective coating was coated on the positive electrode current collector adjacent to the positive electrode active material layer to obtain a protective coating. Specifically, lithium iron phosphate (g capacity q₁ is 150 mAh, Dv50 is 5µm, and Dv90 is 10 µm), conductive carbon black and polyvinylidene fluoride were dissolved in N-methyl pyrrolidone (NMP) solution in a weight ratio of 95:2:3 to form a slurry of a protective coating. Then the positive electrode was obtained after drying, cold pressing and cutting. That is, the coating weight per unit area of the protective coating is 0.1mg/mm², the coating weight per unit area of the positive electrode active material layer is 0.22mg/mm², and the width is 4 µm.

Preparation of negative electrode: Artificial graphite, carboxyl methyl cellulose (CMC) and binder styrene-butadiene rubber (SBR) were dissolved in deionized water at a weight ratio of 97.7:1.3:1 to form a negative electrode slurry. A copper foil with a thickness of 10 µm was used as the current collector of the negative electrode, the negative electrode slurry was coated on the current collector of the negative electrode, and drying and cutting were performed to obtain the negative electrode.

Preparation of a separator: Polyethylene (PE) with a thickness of 8 µm was used as a substrate of the separator. The two sides of the substrate of the separator were coated with alumina ceramic layers of 2 µm. Finally, both sides coated with the ceramic layers are coated with the binder polyvinylidene fluoride (PVDF) of 2.5 mg.

Preparation of an electrolyte: In an environment with a water content of less than 10 ppm, LiPF₆ with a concentration of 1.15 mol/L was added to a non-aqueous organic solvent (ethylene carbonate (EC): propylene carbonate (PC) = 50:50, by weight), and the two were mixed uniformly to obtain the electrolyte.

Preparation of the lithium-ion battery: The positive electrode, the separator and the negative electrode were stacked in sequence, so that the separator was located between the positive electrode and the negative electrode to perform the function of separation, and winding was performed to obtain an electrode assembly. The electrode assembly was placed in an outer packaging aluminum-plastic film, and after the moisture was removed at 80°C, the electrolyte was injected, encapsulation was performed, and the lithium-ion battery was obtained through a process flow of formation, degassing and edge cutting.

In the embodiments and comparative embodiments, parameters are changed on the basis of the steps of Embodiment 1, and the specific changed parameters are shown in the table below.

The test methods for the parameters of this application are described below.

### Lithium plating test:

Standing was performed for 30 min at 25 ±3°C. The lithium-ion battery was charged at a constant current of 0.5 C (1 C is the rated capacity of the lithium-ion battery) to 4.45 V (a rated voltage). The lithium-ion battery was charged at a constant voltage, and charging was stopped when the current reached 0.05 C.

The 5 above lithium-ion batteries were subject to standing for 60 min at -10°C; the lithium-ion batteries were discharged to 3.0 V with the current of 0.5 C, after standing for 5 min, the batteries were charged to 4.45 V with the current of 0.5 C, then charged at a constant voltage, charging was stopped when the current reached 0.05 C, standing was performed for 5 min (this charging and discharging process is repeated 10 times), afterwards, the electrode assembly was disassembled, an entire negative electrode was kept, lithium plating at the edge of the negative electrode was observed, wherein lithium plating was judged according to the following standard: If the edge is silvery white, it indicates that no lithium plating occurs; if the edge is silvery white and the silvery white is discontinuous or has a width less than or equal to 0.2 mm, it indicates that slight lithium plating occurs; if the edge is silvery white has a width of 0.2 mm - 0.5 mm, it indicates that moderate lithium plating occurs; and if the edge is silvery white and the width of the silvery white is greater than 0.5 mm, it indicates that serious lithium plating occurs.

### Extrusion test:

Ten lithium-ion batteries in the embodiment were taken and fully charged at 25 ±3 °C (charged to 4.45 V at the constant current of 0.5 C and constant voltage charge was conducted until the current reached 0.05 C), and the lithium-ion batteries were extruded for 3 h at room temperature (a wide side of the electrode assembly was extruded), where the extrusion pressure was set to 10 kN. The standard for passing the test was that the surface temperature was not greater than 150°C, and there was no disintegration, cracking or fire within 3 hours of the test.

Table 1 shows various parameters and evaluation results of Embodiments 1 to 8 and Comparative Embodiments 1 and 2. In Comparative Embodiment 1, the slurry of the protective coating includes 90.0wt% of Al₂O₃ and 10.0wt% of polyvinylidene fluoride (PVDF), and other parameters are the same as those of Embodiment 1. In Comparative Embodiment 2, the protective coating was not coated. The type of the first active material of the protective coating of Embodiments 2 to 4 is different from that of Embodiment 1, and the total amount of the first active material is the same as that of Embodiment 1. The type of the second active material of the positive electrode active material layer of Embodiments 5 to 8 is different from that of Embodiment 1.

**Table 1**

| | First active material of protective coating | Second active material of positive electrode active material layer | Lithium plating or not | Extrusion pass rate (pass quantity / test quantity) |
|---|---|---|---|---|
| Embodiment 1 | Lithium iron phosphate | Lithium cobalt oxide | No lithium plating | 10/10 |
| Embodiment 2 | Lithium manganese ferro-phosphate | Lithium cobalt oxide | No lithium plating | 10/10 |
| Embodiment 3 | 90wt% lithium iron phosphate + 10wt% lithium cobalt oxide | Lithium cobalt oxide | No lithium plating | 10/10 |
| Embodiment 4 | 80wt% lithium iron phosphate + 20wt% lithium nickel manganese cobalt oxide | Lithium cobalt oxide | No lithium plating | 10/10 |
| Embodiment 5 | Lithium iron phosphate | Lithium manganate | No lithium plating | 10/10 |
| Embodiment 6 | Lithium iron phosphate | Lithium iron phosphate | No lithium plating | 10/10 |
| Embodiment 7 | Lithium iron phosphate | Lithium nickel cobaltate | No lithium plating | 10/10 |
| Embodiment 8 | Lithium iron phosphate | 50wt% lithium nickel cobaltate + 50wt% lithium cobalt oxide | No lithium plating | 10/10 |
| Comparative embodiment 1 | Aluminum oxide | Lithium cobalt oxide | Serious lithium plating | 10/10 |
| Comparative Embodiment 2 | Without protective coating | Lithium cobalt oxide | No lithium plating | 4/10 |

Through the comparison between Embodiments 1 to 4 and Comparative Embodiment 2, it can be seen that compared with the positive electrode without any protective coating, the arrangement of the protective coating can significantly improve the extrusion pass rate of a lithium-ion battery, because lithium iron phosphate and lithium manganese ferro-phosphate in the protective coating have high resistance in the full charge state, and can achieve charging and discharging.

Through the comparison between Embodiments 1 to 4 and Comparative Embodiment 1, it can be seen that compared with the protective coating without any active material, the adoption of the active material in the protective coating can significantly alleviate lithium plating at the negative electrode of the lithium-ion battery. This is because the protective coating according to this application can achieve normal charge and discharge, and the negative electrode active material at the orthographic projection of the protective coating is less prone to excessive polarization, thereby avoiding lithium plating.

Through the comparison between Embodiments 1 to 4, it can be seen that using lithium iron phosphate, lithium manganese ferro-phosphate, etc. as the first active material of the protective coating can improve the extrusion pass rate and alleviate lithium plating of lithium-ion batteries. Through the comparison between Embodiments 5 to 8, it can be seen that the adoption of different active materials in the positive electrode active material layer can achieve a good extrusion pass rate and lithium plating.

Table 2 shows various parameters and evaluation results of Embodiments 9 to 31. The coating weight per unit area of the protective coating in Embodiments 9 to 14 is different from that in Embodiment 1. The coating weight per unit area of the protective coating in Embodiments 15 to 19 and the coating weight per unit area of the positive electrode active material layer are different from those in Embodiment 1. The coating weight per unit area of the protective coating in Embodiments 20 to 24 is 0.13 mg/mm², the coating weight per unit area of the positive electrode active material layer is 0.13 mg/mm², and the mass content of the first active material in the protective coating is different from that in Embodiment 1. The coating weight per unit area of the protective coating in Embodiments 25 to 29 is 0.1 mg/mm², the coating weight per unit area of the positive electrode active material layer is 0.13 mg/mm², the mass content of the first active material in the protective coating is 0.95, and the mass content of the second active material in the positive electrode active material layer is different from that in Embodiment 1. The coating weight per unit area of the protective coating in Embodiments 30 and 31 and the coating weight per unit area of the positive electrode active material layer are different from those in Embodiment 1.

**Table 2**

| | Coating weight m₁ per unit area of the protective coating (mg/mm²) | Coating weight m₂ per unit area of the positive electrode active material layer (mg/mm² ) | Mass conte nt l₁ of the first active materi al in the protec tive coatin g | Mass content l₂ of the second active materia l in the positive electrod e active materia l layer | m₁×q₁ ×l₁ | 90%×m₂ ×q₂×l₂ | Lithiu m plating or not | Extrusi on pass rate (pass quantit y / test quantit y) |
|---|---|---|---|---|---|---|---|---|
| Embodi ment 9 | 0.01 | 0.22 | 0.95 | 0.96 | 1.425 | 33.45408 | No lithium plating | 9/10 |
| Embodi ment 10 | 0.026 | 0.22 | 0.95 | 0.96 | 3.705 | 33.45408 | No lithium plating | 10/10 |
| Embodi ment 11 | 0.08 | 0.22 | 0.95 | 0.96 | 11.4 | 33.45408 | No lithium plating | 10/10 |
| Embodi ment 12 | 0.13 | 0.22 | 0.95 | 0.96 | 18.52 5 | 33.45408 | No lithium plating | 10/10 |
| Embodi ment 13 | 0.182 | 0.22 | 0.95 | 0.96 | 25.93 5 | 33.45408 | No lithium plating | 10/10 |
| Embodi ment 14 | 0.22 | 0.22 | 0.95 | 0.96 | 31.35 | 33.45408 | Slight lithium plating | 10/10 |
| Embodi ment 15 | 0.13 | 0.125 | 0.95 | 0.96 | 18.52 5 | 19.008 | No lithium plating | 9/10 |
| Embodi ment 16 | 0.13 | 0.13 | 0.95 | 0.96 | 18.52 5 | 19.76832 | No lithium plating | 10/10 |
| Embodi ment 17 | 0.13 | 0.4 | 0.95 | 0.96 | 18.52 5 | 60.8256 | No lithium plating | 10/10 |
| Embodi ment 18 | 0.13 | 0.52 | 0.95 | 0.96 | 18.52 5 | 79.07328 | No lithium plating | 10/10 |
| Embodi ment 19 | 0.13 | 0.6 | 0.95 | 0.96 | 18.52 5 | 91.2384 | Slight lithium plating | 10/10 |
| Embodi ment 20 | 0.13 | 0.13 | 0.995 | 0.96 | 19.40 25 | 19.76832 | Slight lithium plating | 10/10 |
| Embodi ment 21 | 0.13 | 0.13 | 0.99 | 0.96 | 19.30 5 | 19.76832 | No lithium plating | 10/10 |
| Embodi ment 22 | 0.13 | 0.13 | 0.9 | 0.96 | 17.55 | 19.76832 | No lithium plating | 10/10 |
| Embodi ment 23 | 0.13 | 0.13 | 0.85 | 0.96 | 16.57 5 | 19.76832 | No lithium plating | 10/10 |
| Embodi ment 24 | 0.13 | 0.13 | 0.8 | 0.96 | 15.6 | 19.76832 | Slight lithium plating | 10/10 |
| Embodi ment 25 | 0.1 | 0.13 | 0.95 | 0.995 | 14.25 | 20.48904 | Slight lithium plating | 10/10 |
| Embodi ment 26 | 0.1 | 0.13 | 0.95 | 0.99 | 14.25 | 20.38608 | No lithium plating | 10/10 |
| Embodi ment 27 | 0.1 | 0.13 | 0.95 | 0.9 | 14.25 | 18.5328 | No lithium plating | 10/10 |
| Embodi ment 28 | 0.1 | 0.13 | 0.95 | 0.85 | 14.25 | 17.5032 | No lithium plating | 10/10 |
| Embodi ment 29 | 0.1 | 0.13 | 0.95 | 0.8 | 14.25 | 16.4736 | Slight lithium plating | 10/10 |
| Embodi ment 30 | 0.139 | 0.13 | 0.95 | 0.96 | 19.76 832 | 19.76832 | No lithium plating | 10/10 |
| Embodi ment 31 | 0.145 | 0.13 | 0.95 | 0.96 | 20.66 25 | 19.76832 | Moder ate lithium plating | 10/10 |

Through the comparison between Embodiments 9 to 14, it can be seen that when the coating weight per unit area of the protective coating is lower than 0.026 mg/mm², the extrusion pass rate of the electrochemical device decreases, that is, the safety performance decreases. When the coating weight per unit area of the protective coating is higher than 0.182 mg/mm², the polarization of the negative electrode active material layer at the position corresponding to the protective coating is excessively large, which leads to partial lithium plating on the surface of the negative electrode.

Through the comparison between Embodiments 15 to 19, it can be seen that when the coating weight per unit area of the positive electrode active material layer is less than 0.13, the extrusion pass rate of the electrochemical device decreases; and when the coating weight per unit area of the positive electrode active material layer is greater than 0.52, the polarization of the negative electrode active material layer at the position corresponding to the protective coating is increased, which leads to partial lithium plating on the surface of the negative electrode.

Through the comparison between Embodiments 20 to 24, it can be seen that when the mass content of the first active material in the protective coating is less than 0.85, partial lithium plating occurs to the negative electrode of the electrochemical device; and when the mass content of the first active material in the protective coating is greater than 0.99, partial lithium plating occurs to the negative electrode of the electrochemical device.

Through the comparison between Embodiments 25 to 29, it can be seen that when the mass content of the second active material in the positive electrode active material layer is less than 0.85, partial lithium plating occurs to the negative electrode of the electrochemical device; and when the mass content of the second active material in the positive electrode active material layer is greater than 0.99, partial lithium plating occurs to the negative electrode of the electrochemical device.

Through the comparison between Embodiments 30 and 31, it can be seen that when the capacity per unit area of the protective coating is greater than 90% of the capacity per unit area of the positive electrode active material layer, the negative electrode at the orthographic projection of the protective coating is also prone to lithium plating.

Table 3 shows various parameters and evaluation results of Embodiments 32 to 66. In Embodiments 32 to 40, the mass ratio of the first active material to the conductive agent to the binder of the protective coating is different from that of Embodiment 1. In Embodiments 41 to 44, the type of the conductive agent and/or the binder in the protective coating is different from that of Embodiment 1. In Embodiments 45 to 50, the porosity of the protective coating is different from that of Embodiment 1. In Embodiments 51 to 56, the width of the protective coating is different from that of Embodiment 1. In Embodiments 57 to 60, the resistance of the protective coating in the full charge state is different from that of Embodiment 1. In Embodiments 61 to 64, Dv50 and Dv90 at the first active material are different from those of Embodiment 1. In Embodiments 65 to 66, the position of the protective coating relative to the positive electrode is different from that of Embodiment 1.

**Table 3**

| | First active material of protective coating | Conductive agent of protective coating | Binder of protectiv e coating | Mass ratio of the first active material to the conductiv e agent to the binder in the protective coating | Poro sity of prot ectiv e coati ng | Width of protecti ve coating | Resista nce of the protecti ve coating in a full charge state | Dv50 of first active materi al | Dv99 of first active materi al | Whether the orthograph ic projection of the protective coating wholly falls on the negative electrode active material layer | Lithium plating or not | Extrusi on pass rate (pass quantity / test quantity ) |
|---|---|---|---|---|---|---|---|---|---|---|---|---|
| Embodi ment 32 | Lithium iron phosphate | Conductive carbon black | Polyviny lidene fluoride | 99:0:1 | 35% | 3 mm | 80 Ω | 1.1 um | 5 um | Yes | No lithium plating | 10/10 |
| Embodi ment 33 | Lithium iron phosphate | Conductive carbon black | Polyviny lidene fluoride | 99.5:0:0.5 | 40% | 3 mm | 60 Ω | 1.1 um | 5 um | Yes | No lithium plating | 8/10 |
| Embodi ment 34 | Lithium iron phosphate | Conductive carbon black | Polyviny lidene fluoride | 95:2:3 | 42% | 3 mm | 50 Ω | 1.1 um | 5 um | Yes | No lithium plating | 10/10 |
| Embodi ment 35 | Lithium iron phosphate | Conductive carbon black | Polyviny lidene fluoride | 90:5:5 | 43% | 3 mm | 37 Ω | 1.1 um | 5 um | Yes | No lithium plating | 10/10 |
| Embodi ment 36 | Lithium iron phosphate | Conductive carbon black | Polyviny lidene fluoride | 85:10:5 | 48% | 3 mm | 30 Ω | 1.1 um | 5 um | Yes | No lithium plating | 10/10 |
| Embodi ment 37 | Lithium iron phosphate | Conductive carbon black | Polyviny lidene fluoride | 85:3:12 | 38% | 3 mm | 77 Ω | 1.1 um | 5 um | Yes | No lithium plating | 10/10 |
| Embodi ment 38 | Lithium iron phosphate | Conductive carbon black | Polyviny lidene fluoride | 85:12:3 | 53% | 3 mm | 4 Ω | 1.1 um | 5 um | Yes | No lithium plating | 7/10 |
| Embodi ment 39 | Lithium iron phosphate | Conductive carbon black | Polyviny lidene fluoride | 85:1:14 | 26% | 3 mm | 100 Ω | 1.1 um | 5 um | Yes | Moderat e lithium plating | 10/10 |
| Embodi ment 40 | Lithium iron phosphate | Conductive carbon black | Polyviny lidene fluoride | 80:15:5 | 56% | 3 mm | 5 Ω | 1.1 um | 5 um | Yes | No lithium plating | 8/10 |
| Embodi ment 41 | Lithium iron phosphate | Conductive carbon black | Carboxyl ic acid modified polyviny lidene fluoride | 95:2:3 | 45% | 3 mm | 51 Ω | 1.1 um | 5 um | Yes | No lithium plating | 10/10 |
| Embodi ment 42 | Lithium iron phosphate | Conductive carbon black | Polytetra fluoroeth ylene | 95:2:3 | 47% | 3 mm | 53 Ω | 1.1 um | 5 um | Yes | No lithium plating | 10/10 |
| Embodi ment 43 | Lithium iron phosphate | Multi-walled carbon nanotube | Polyviny lidene fluoride | 95:2:3 | 40% | 3 mm | 37 Ω | 1.1 um | 5 um | Yes | No lithium plating | 10/10 |
| Embodi ment 44 | Lithium iron phosphate | 50wt% conductive carbon black + 50wt% multi-walled carbon nanotube | Polyviny lidene fluoride | 95:2:3 | 41% | 3 mm | 42 Ω | 1.1 um | 5 um | Yes | No lithium plating | 10/10 |
| Embodi ment 45 | Lithium iron phosphate | Conductive carbon black | Polyviny lidene fluoride | 95:2:3 | 15% | 3 mm | 47 Ω | 1.1 um | 5 um | Yes | No lithium plating | 10/10 |
| Embodi ment 46 | Lithium iron phosphate | Conductive carbon black | Polyviny lidene fluoride | 95:2:3 | 25% | 3 mm | 47 Ω | 1.1 um | 5 um | Yes | No lithium plating | 10/10 |
| Embodi ment 47 | Lithium iron phosphate | Conductive carbon black | Polyviny lidene fluoride | 95:2:3 | 40% | 3 mm | 50 Ω | 1.1 um | 5 um | Yes | No lithium plating | 10/10 |
| Embodi ment 48 | Lithium iron phosphate | Conductive carbon black | Polyviny lidene fluoride | 95:2:3 | 50% | 3 mm | 53 Ω | 1.1 um | 5 um | Yes | No lithium plating | 10/10 |
| Embodi ment 49 | Lithium iron phosphate | Conductive carbon black | Polyviny lidene fluoride | 95:2:3 | 10% | 3 mm | 45 Ω | 1.1 um | 5 um | Yes | Moderat e lithium plating | 10/10 |
| Embodi ment 50 | Lithium iron phosphate | Conductive carbon black | Polyviny lidene fluoride | 95:2:3 | 55% | 3 mm | 55 Ω | 1.1 um | 5 um | Yes | No lithium plating | 9/10 |
| Embodi ment 51 | Lithium iron phosphate | Conductive carbon black | Polyviny lidene fluoride | 95:2:3 | 42% | 0.5 mm | 50 Ω | 1.1 um | 5 um | Yes | No lithium plating | 10/10 |
| Embodi ment 52 | Lithium iron phosphate | Conductive carbon black | Polyviny lidene fluoride | 95:2:3 | 42% | 0.3 mm | 50 Ω | 1.1 um | 5 um | Yes | Moderat e lithium plating | 10/10 |
| Embodi ment 53 | Lithium iron phosphate | Conductive carbon black | Polyviny lidene fluoride | 95:2:3 | 42% | 2 mm | 50 Ω | 1.1 um | 5 um | Yes | No lithium plating | 10/10 |
| Embodi ment 54 | Lithium iron phosphate | Conductive carbon black | Polyviny lidene fluoride | 95:2:3 | 42% | 5 mm | 50 Ω | 1.1 um | 5 um | Yes | No lithium plating | 10/10 |
| Embodi ment 55 | Lithium iron phosphate | Conductive carbon black | Polyviny lidene fluoride | 95:2:3 | 42% | 10 mm | 50 Ω | 1.1 um | 5 um | Yes | No lithium plating | 10/10 |
| Embodi ment 56 | Lithium iron phosphate | Conductive carbon black | Polyviny lidene fluoride | 95:2:3 | 42% | 15 mm | 50 Ω | 1.1 um | 5 um | Yes | No lithium plating | 9/10 |
| Embodi ment 57 | 99%wt lithium iron phosphate + 1wt% lithium nickel manganese cobalt oxide | Conductive carbon black | Polyviny lidene fluoride | 95:2:3 | 42% | 3 mm | 45 Ω | 2.5 um | 7.7 um | Yes | No lithium plating | 10/10 |
| Embodi ment 58 | 98%wt lithium iron phosphate + 2wt% lithium nickel manganese cobalt oxide | Conductive carbon black | Polyviny lidene fluoride | 95:2:3 | 42% | 3 mm | 39 Ω | 2.8 um | 7.8 um | Yes | No lithium plating | 10/10 |
| Embodi ment 59 | 97wt% lithium iron phosphate + 3wt% lithium nickel manganese cobalt oxide | Conductive carbon black | Polyviny lidene fluoride | 95:2:3 | 42% | 3 mm | 30 Ω | 3.0 um | 7.9 um | Yes | No lithium plating | 10/10 |
| Embodi ment 60 | 96wt% lithium iron phosphate + 4wt% lithium nickel manganese cobalt oxide | Conductive carbon black | Polyviny lidene fluoride | 95:2:3 | 42% | 3 mm | 20 Ω | 3.2 um | 8.2 um | Yes | No lithium plating | 9/10 |
| Embodi ment 61 | 98%wt lithium iron phosphate + 2wt% lithium nickel manganese cobalt oxide | Conductive carbon black | Polyviny lidene fluoride | 95:2:3 | 45% | 3 mm | 30 Ω | 5 um | 7.9 um | Yes | No lithium plating | 10/10 |
| Embodi ment 62 | 98%wt lithium iron phosphate + 2wt% lithium nickel manganese cobalt oxide | Conductive carbon black | Polyviny lidene fluoride | 95:2:3 | 43% | 3 mm | 30 Ω | 7.5 um | 9.3 um | Yes | No lithium plating | 9/10 |
| Embodi ment 63 | 98%wt lithium iron phosphate + 2wt% lithium nickel manganese cobalt oxide | Conductive carbon black | Polyviny lidene fluoride | 95:2:3 | 43% | 3 mm | 30 Ω | 3.6 um | 10 um | Yes | No lithium plating | 10/10 |
| Embodi ment 64 | 98%wt lithium iron phosphate + 2wt% lithium nickel manganese cobalt oxide | Conductive carbon black | Polyviny lidene fluoride | 95:2:3 | 41% | 3 mm | 30 Ω | 4.3 um | 13 um | Yes | No lithium plating | 9/10 |
| Embodi ment 65 | Lithium iron phosphate | Conductive carbon black | Polyviny lidene fluoride | 95:2:3 | 42% | 3 mm | 50 Ω | 1.1 um | 5 um | Except for the protective coating at the tab, other positions fall on the negative electrode active material layer | Except for moderat e lithium plating at the tab, no lithium plating occurs at other position s | 10/10 |
| Embodi ment 66 | Lithium iron phosphate | Conductive carbon black | Polyviny lidene fluoride | 95:2:3 | 42% | 3 mm | 50 Ω | 1.1 um | 5 um | Except for the outer edge of the protective coating, other positions fall on the negative electrode active material layer | Except for moderat e lithium plating at the outermo st edge, no lithium plating occurs at other position s | 10/10 |

Through the comparison between Embodiments 32 to 40, it can be seen that when there is too little binder (Embodiment 33), the protective coating is prone to falling off, which leads to safety failure. When there is too much conductive agent (Embodiment 38), the resistance of the protective coating is low, and the safety performance is reduced. When there is too much binder (Embodiment 39), the porosity of the protective coating is low, resulting in large polarization and easily causing lithium plating.

Through the comparison between Embodiments 41 to 44, it can be seen that by using different types of conductive agents and binders in the protective coating, the lithium-ion battery has good lithium plating protection and extrusion pass rate.

Through the comparison between Embodiments 45 to 50, it can be seen that when the porosity of the protective coating is too low (Embodiment 49), the polarization of the negative electrode of the lithium-ion battery increases, which easily causes lithium plating. When the porosity of the protective coating is too high (Embodiment 50), the cold pressing pressure is too low, the adhesive property is too low, stripping easily occurs to the protective coating, and the safety performance is reduced.

Through the comparison between Embodiments 51 to 56, it can be seen that when the width of the protective coating is too small (Embodiment 52), the positive electrode active material layer has great influence on the negative electrode of the edge, which easily causes lithium plating. When the width of the protective coating is too large (Embodiment 56), the head of the lithium-ion battery is prone to getting soft, which leads to the deformation of the lithium-ion battery. The lithium-ion battery is prone to being broken under the action of external force, which easily causes a short circuit, and then reduces the extrusion pass rate of the lithium-ion battery.

Through the comparison between Embodiments 57 to 60, it can be seen that by adjusting the different combinations of the first active material of the protective coating, the resistance of the protective coating in the full charge state can be changed, and when the resistance of the protective coating is too low (Embodiment 60), the safety performance of the lithium-ion battery is reduced.

Through the comparison between Embodiments 61 to 64, it can be seen that by reducing the particle size Dv50 and Dv99 of the first active material in the protective coating, a small thickness of the protective coating can be achieved. If the particle size of the first active material is too large, particles of the first active material easily scratch the current collector, which reduces the extrusion pass rate of the lithium-ion battery.

Through the comparison between Embodiments 65 to 66, it can be seen that the higher the proportion of the protective coating that does not fall on the negative electrode active material layer, the worse the lithium plating effect. However, even in this case, the effect is better than that without the protective coating.

The above description is only a preferred embodiment of this application and is illustrative of the principles of the technology employed. It will be understood by those skilled in the art that the scope of the disclosure referred to in this application is not limited to technical solutions resulting from any particular combination of the features described above, but is intended to encompass other technical solutions resulting from any combination of the technical features described above or their equivalents, for example, a technical solution formed by replacing the above-mentioned features with the technical features with similar functions disclosed in this application.

## Claims

1. An electrochemical device, comprising:
a positive electrode,
the positive electrode comprising a positive electrode current collector, a protective coating disposed on a surface of one side of the positive electrode current collector towards a tab portion, and a positive electrode active material layer disposed on a surface of at least one side of the positive electrode current collector; wherein
the protective coating comprises a first active material, and the positive electrode active material layer comprises a second active material.

2. The electrochemical device according to claim 1, wherein m₁×q₁×l₁≤90%×m₂×q₂×l₂,
m₁ represents a coating weight per unit area of the protective coating, m₂ represents a coating weight per unit area of the positive electrode active material layer, q₁ represents a gram capacity of the first active material, q₂ represents a gram capacity of the second active material, l₁ represents a mass content of the first active material in the protective coating, and lz represents a mass content of the second active material in the positive electrode active material layer.

3. The electrochemical device according to claim 2, wherein the positive electrode satisfies at least one of the following conditions:
the coating weight m₁ per unit area of the protective coating is within a range of: 0.026 mg/mm²≤m₁≤0.182 mg/mm²,
the coating weight m₂ per unit area of the positive electrode active material layer is within a range of: 0.130 mg/mm²≤m₂≤0.520 mg/mm²,
the mass content l₁ of the first active material in the protective coating satisfies the following condition: 85%≤l₁≤99%, and
the mass content l₂ of the second active material in the positive electrode active material layer satisfies the following condition: 85%≤l₂≤99%.

4. The electrochemical device according to claim 1, wherein the first active material comprises at least one of ferrous lithium phosphate or lithium manganese ferro-phosphate; and the second active material comprises at least one of lithium cobalt oxide, lithium nickel manganese cobalt oxide, lithium nickel cobalt aluminum oxide, lithium manganate, lithium nickel manganese oxide or lithium cobalt manganese oxide.

5. The electrochemical device according to claim 1, wherein the protective coating further comprises a conductive agent and a binder; and a mass ratio of the first active material to the conductive agent to the binder is (85% - 99%): (0% - 10%): (1% - 12%).

6. The electrochemical device according to claim 5, wherein the conductive agent comprises at least one of conductive carbon black, conductive graphite, carbon fiber, a multi-walled carbon nanotube, a single-walled carbon nanotube, hard carbon, soft carbon, Ketjen black or graphene, and the binder comprises at least one of polyvinylidene fluoride, polytetrafluoroethylene, sodium carboxymethylcellulose, lithium sodium carboxymethylcellulose, modified polyvinylidene fluoride, modified styrene butadiene rubber or polyurethane.

7. The electrochemical device according to claim 1, wherein a porosity of the protective coating is 15% to 50%.

8. The electrochemical device according to claim 1, wherein a width of the protective coating is greater than or equal to 0.5 mm, and less than or equal to 10 mm.

9. The electrochemical device according to claim 1, wherein a resistance of the protective coating in a full charge state is greater than or equal to 30 Q.

10. The electrochemical device according to claim 1, wherein a Dv50 of the first active material is less than or equal to 5 µm, and a Dv99 of the first active material is less than or equal to 10 µm.

11. The electrochemical device according to claim 1, wherein the protective coating is adjacent to or partially coincident with the positive electrode active material layer.

12. The electrochemical device according to claim 1, wherein the electrochemical device further comprises a negative electrode; the negative electrode comprises a negative electrode current collector and a negative electrode active material layer located on at least a part of a surface of the negative electrode current collector; and an orthographic projection of the protective coating on the negative electrode active material layer partially or wholly falls on the negative electrode active material layer.

13. An electronic device comprising the electrochemical device according to any one of claims 1 to 12.
